# EUROPEAN PATENT APPLICATION

(11) **EP 4 644 011 A2**
(43) Date of publication of application: **05.11.2025**
(21) Application number: 25168407.2
(22) Date of filing: 03.04.2025
(51) Int. Cl.: B09B 3/30, A47J 31/44, B09B 5/00, B29B 17/02, B09B 101/70, B09B 101/75

(54) **PROCESS FOR RECYCLING COFFEE PORTIONS RECYCLED SUBSTANCES AND USES THEREOF**

(30) Priority: 03.04.2024 PT 2024119363
(71) Applicant: Novadelta - Comércio e Indústria de Cafés, Unipessoal Lda, 1950-041 Lisboa (PT)
(72) Inventor: NABEIRO, Rui Miguel, 7370-112 Campio Maior (PT); IGREJA RODRIGUES, Carla Isabel, 2580-551 Alenquer (PT)
(74) Representative: Patentree

(57) **Abstract**

The present disclosure describes processes for recycling portions (1) of coffee comprising packaging material (2) and a portion of edible beverage precursor substance, in particular roast and ground coffee beans, after use of these portions (1) of coffee in beverage preparation apparatus (10), in order to obtain a recycled substance (5) suitable for reuse in the production of different articles including packaging, containers, and constructive parts.

The present disclosure further describes a recycled substance (5) obtained based on a recycling process of the type of the present invention.

## Description

### TECHNICAL FIELD

The present description relates to the field of recycling processes for materials associated with coffee portions, for example in the form of capsules or tablets, used for preparing beverages, in particular espresso-type coffee, and also relates to recycled substances resulting from this type of recycling processes, and uses of said recycled substances.

### BACKGROUND

The use of roast and ground coffee beans after extraction of a coffee-based beverage, hereinafter referred to as coffee grounds, has a growing number of applications, but embraces several problems.

A first problem is associated with the recycling of coffee portions from a place of consumption, i.e., *in situ,* to a remote location, i.e., *ex situ,* in a package or collection container made of a material other than coffee grounds, and to the need to separate materials during the recycling process.

A second problem is associated with the use of packaging materials with more favorable characteristics in terms of recycling and obtaining new composite materials with different uses, including reuse as packaging, thereby closing the material use cycle.

In particular, in the case of coffee portions in coffee capsules used in the preparation of beverages such as espresso coffee and other aromatic beverages, there has been such an increase that there is now growing concern about the recycling of the materials used, including the packaging materials.

In general, the packaging materials of this type of capsules are materials with oxygen barrier and UV barrier properties, including synthetic materials and metallic materials, sometimes also composites of synthetics and metals, as well as portions of paper or similar materials.

The state of the art includes various documents relating to different solutions for recycling coffee capsules of the type of the present invention.

Document DE 10 2008 041793 A1 discloses a device for opening coffee capsules, which is configured so that it can be operated manually by a user in order to provide the separation of the portion of edible substance from the surrounding material.

Document EP 3250330 B1 discloses another device for treating used capsules, in this case operated by an electric motor, but also for separating the organic material from the rest of the packaging. The device includes the mechanical processing of the capsules, in particular breaking the packaging to allow the edible material to escape.

Document WO 2018/091415 A1 discloses a process for pre-processing, conditioning, recovering, and recycling used capsules in the production of hot beverages of the type of the present description. In particular, an industrial process comprises several steps including a step of breaking the capsules by centrifugation and friction in a mixer, resulting in a mixture of packaging waste of different sizes and organic waste released from the capsules, and a step of sieving the mixture to separate the container waste and the organic waste.

Document US 10492521 B2 discloses a composite including coffee grounds and a method of producing thereof, which includes drying coffee grounds so that the water content of 20-50% by weight of coffee grounds is 0.1-3%, and stirring and mixing the coffee grounds with 40-70% by weight of plastic, 5-25% of calcium carbonate and 3-10% of a mixture modifier, and producing composite granules.

Document WO 2019/038795 A1 discloses a container for collecting used coffee powder, incorporating means for eliminating microorganisms present in the remains of used coffee powder, coffee tablets or capsules.

Document KR 20220105758A discloses plastic pellets made from recycled coffee grounds and a method for manufacturing the same, wherein said pellets comprise 1-30% by weight of coffee grounds powder having a particle size equal to or less than 20 µm; 1-10% by weight of a hardness enhancer and 1-90% by weight of plastic material.

Document CN 112552647A discloses a method for preparing an epoxy resin composite material made from coffee grounds comprising raw materials in mass percentages of: 9.1-70% of coffee grounds, 0.1-5% of a surface modifier, and 30-99% of epoxy resin.

Furthermore, in the case of coffee portions distributed in packages with a plurality of individual portions, there is an interest in improving the ergonomics of recycling coffee grounds.

Document CN 217416886U discloses a bag for recycling coffee grounds that has a handle at the upper end and sealing strips that provide joint closure on the inner sides of the lower ends of the front surface of the bag.

Document KR 101699537B1 discloses a system and method for collecting coffee grounds, including the transmission of information from the waste discharge site regarding the weight and water content of the coffee grounds, as well as data relating to the location of the site and consideration of dry residues and collection distances for coffee grounds storage containers.

Document KR 20230126147A discloses an online platform system for integrated coffee grounds management services, including recycling services for coffee consumption sites.

None of the documents in the prior art disclose a solution that provides more ergonomic recycling of coffee capsules for the end user, without the need for *in situ* separation of packaging material and coffee grounds, and with lower overall recycling process costs, in particular with the use of packaging material and coffee grounds.

These facts are described in order to illustrate the technical problem solved by the embodiments of the present document.

### GENERAL DESCRIPTION

It is an objective of the present disclosure to provide a more economically and environmentally efficient recycling process for used coffee portions, including coffee grounds and packaging material, including with improved use of used materials.

This objective is achieved according to the present invention by means of a process according to claim 1, with the preferred embodiments being disclosed in the dependent claims.

In particular, the process for recycling used coffee portions according to the disclosure includes supplying packaging material and coffee grounds to at least one joint processing step resulting in a recycled substance, such that a recycled substance resulting from the recycling process has a composition that includes packaging material and coffee grounds.

The process includes the *in situ* collection of used coffee portions that are collected in an individual portion package or that are collected in a collection package of multiple individual portions, provided in at least one packaging material, and coffee grounds, including at least grounds of ground coffee beans, after the preparation of a coffee-based beverage.

The process includes the use of coffee portions in the preparation of a beverage, wherein the packaging of said coffee portions is provided in a packaging material that includes a mixture of coffee capsule packaging and coffee grounds resulting from the extraction process of a coffee portion, including at least one packaging material associated with a confining portion, such as in the form of a capsule, a tablet, a sealing film, such as a sheet of metallic and/or synthetic composite material, and a filter element, such as a paper filter or cellulosic material.

In an embodiment, the process does not include the separation *in situ* of materials associated with the used coffee portions, so that users do not need to separate materials associated with the coffee capsules.

In an embodiment, the process includes the use of unused coffee portions in a beverage preparation device and the collection by the user of used coffee portions in a collection container, in particular in a collection container predetermined for this purpose.

In an embodiment, the process includes transporting the collection container from a beverage preparation and/or consumption location *in situ* to a processing location *ex situ* for further processing.

In particular, the objective is further achieved by means of a process that does not include separating materials associated with the coffee portions *ex situ.*

In an embodiment, the process includes a step of washing at least the packaging material of used coffee portions, and a subsequent drying step, preferably at a drying temperature below 80°C.

In an embodiment, the process includes a step of separating materials foreign to the coffee portions, preferably *ex situ.*

In an embodiment, the process includes a step of grinding the coffee portions, preferably *ex situ,* without prior separation of the associated materials.

In an embodiment, the process includes a step of grinding at least one packaging material of the used coffee portions, preferably at least two different packaging materials.

In an embodiment, the process includes a step of mixing the ground packaging material with coffee grounds, preferably in accordance with predefined mass ratios.

In an embodiment, the process includes a step of supplying the mixture of ground packaging material and coffee grounds for melting thereof *ex situ,* without separation of the associated materials.

In an embodiment, the process includes injecting the melt of the recycled substance into molds with the molten material obtained after grinding the packaging material of used coffee portions.

In an embodiment, the process includes a step of handling the recycled substance for the production of packaging, containers, and other similar articles.

In an embodiment, the process includes a step of handling the recycled substance for the production of coffee portion packages and other edible substances.

In an embodiment, the process includes filling coffee portion packages with roast and ground coffee beans and other edible substances.

In an embodiment, the process includes preparing a beverage, including espresso coffee, in a beverage preparation apparatus with a beverage capsule, including a coffee capsule, whose packaging is obtained by recycling according to the process described by the present disclosure.

In an embodiment, the recycling process is devoid of a process of separating packaging materials, i.e., packaging of coffee portions, and coffee grounds.

In an embodiment, the recycling process is devoid of a step of removing microorganisms present in the coffee grounds.

In an embodiment, the coffee portions are collected in a portion package made of a composite material, in particular a synthetic composite material, which is configured so that it can confine an individual portion of roast and ground coffee beans.

In an embodiment, the portion package of the coffee portions is a synthetic material that includes natural fibers or consists of natural fibers.

In an embodiment, the portion package of the coffee portions is a rigid or semi-rigid material.

In an embodiment, the portion package of the coffee portions comprises a container part and a lid part.

In an embodiment, the portion package of the coffee portions comprises at least one film-type element, or membrane.

Another objective of the present disclosure is to provide a recycled substance from coffee portions and portion packaging, including packaging material and coffee grounds.

In particular, the recycled substance according to the disclosure has a composition that includes portion packaging material and coffee grounds recovered from used coffee portions.

The present disclosure also relates to the use of a recycled substance, wherein the use may include the production of articles by melting a material and/or the use includes the production of articles by at least one of: mold injection, three-dimensional printing.

Another objective of the present disclosure is to provide a recycled article from coffee portions and portion packages that has a higher fraction of recycled material in its composition.

In particular, this objective is achieved according to the present disclosure by means of an article obtained from a substance recycled from coffee portions, wherein the article is configured to provide at least part of at least one of: a packaging, including a packaging for collecting edible substances in an oxygen-tight manner, a constructive and/or functional part, a constructive profile, and/or is provided at least for the most part, preferably in its entirety, by a recycled substance obtained from the joint processing of packaging material and coffee grounds.

One of the aspects of the present invention relates to a process for recycling coffee portions (1), wherein said coffee portions (1) comprise a defined amount of beverage precursor substance (PS) contained in a portion package (2) and coffee grounds (3), wherein the process includes the following steps:
obtaining at least one of portion package (2) and coffee grounds (3) in a collection container (4),
processing at least one of portion packaging material (21, 22, 23) and collection container material (24) together with coffee grounds;
obtaining a recycled substance (5) comprising a composition including coffee grounds and at least one of portion packaging material (21, 22, 23) and collection container material (24) to obtain the recycled coffee portion.

In an embodiment for best results, the process does not include at least one of the following steps:
separating the coffee grounds from the portion packaging material (21, 22, 23);
separating the coffee grounds (3) from at least one of portion packaging material (21, 22, 23) and/or at least one collection container material (24) until a recycled substance (5) is obtained, preferably the process does not include separating any coffee portion packaging material (21, 22, 23) or collection container material (24).

In an embodiment for best results, the process includes at least one of the following steps:
collecting coffee grounds and/or portion packages (2) at a collection site, preferably coffee grounds and portion packages (2), in a collection container (4), wherein the portion packages (2) include at least one portion packaging material (21, 22, 23) and the collection container (4) includes at least one collection container material (41),
separating coffee grounds (3) from at least one of: at least one portion packaging material (21, 22, 23) and at least one collection container material (24) at a remote location until a recycled substance (5) is obtained, preferably including separating at least one of: portion packaging material (21, 22, 23) and collection container material (24) including at least one of: composite materials and materials derived from edible substances, and
gathering at a remote location, after the separating step, coffee grounds (3) from at least one of: at least one portion packaging material (21, 22, 23) and at least one collection container material (24) so as to obtain a mixture of materials for joint processing.

In an embodiment for best results, the process includes at least one step, preferably two steps, of joint processing of at least one of portion packaging material (21, 22, 23) and collection container material (24) together with coffee grounds (3), wherein it is preferred when the steps of joint processing include at least material gathering, preferably including mechanical mixing of materials, and joint heating of materials;
wherein the portion packaging material (21, 22, 23) includes at least one of: first, second and third portion material (21, 22, 23), including at least one of: an individual package configured for collection of an individual portion of beverage precursor substance and a multiple package configured for collection of a plurality of individual portions of beverage precursor substance, and/or wherein at least one collection container material (24) has a composition comprising at least one substance also present in the composition of at least one portion packaging material (21, 22, 23), and/or
wherein the beverage precursor substance includes at least one of: ground and roast coffee beans, and a derivative of roast coffee beans.

In an embodiment for best results, the process includes a step of joint heating at least one of portion packaging material (21, 22, 23) and collection container material (24) together with coffee grounds (3) in a mixture previously prepared according to at least one of:
in a predefined ratio of quantities of at least one packaging material (2; 21, 22, 23, 24) and coffee grounds (3), optionally still further materials;
including at least one of: a portion material (21, 22, 23) and collection material (24), so as to obtain a recycled substance (5) having a composition including at least one portion packaging material (2; 21, 22, 23, 24) and coffee grounds (3);
and/or
wherein the process includes a step of joint heating at least one of portion packaging material (21, 22, 23) and collection container material (24) together with coffee grounds (3) at a heating temperature (TH) according to at least one of:
comprised between 150 and 550 °C, preferably between 160 and 350 °C, more preferably between 190 and 250 °C;
corresponding to at least one melting temperature (TM) of packaging material (2);
so that a recycled substance (5) results in a liquid and/or pasty state.

In an embodiment for best results, the process further includes drying at least coffee grounds (3), together with, or preferably separately from, at least one of portion packaging material (21, 22, 23) and collection container material (24), wherein preferably the drying includes at least one of:
drying, preferably a first drying step, at ambient temperature conditions between 10 and 30°C until a moisture content of at most 60%, preferably at most 50%, is reached,
drying, preferably a second drying step, at least of the coffee grounds (3), preferably at a drying temperature (DT) between 30°C and 80°C, more preferably between 35°C and 50°C, until the coffee grounds (3) reach a maximum moisture content of 5%, preferably a maximum of 3%;
wherein the drying step is preferably carried out before a step of heating the coffee grounds (3) and packaging material (2) together, wherein the process further comprises at least one of the following steps:
separating coffee grounds (3) from at least part of at least one of: portion packaging material (21, 22, 23) and collection container material (24);
separating and removing at least part of portion packaging materials (21, 22, 23), preferably including at least one of: metallic materials and non-decomposable materials;
washing the portion packaging material (21, 22, 23), preferably separately from the coffee grounds (3);
removing foreign materials and objects other than at least one of: portion packaging material (21, 22, 23) and coffee grounds (3),
wherein preferably the steps of washing and removing foreign materials and objects are carried out before the step of drying at least the coffee grounds (3).

In an embodiment for best results, the process includes at least the following steps:
grinding at least one of portion packaging material (21, 22, 23), collection container material (24) and coffee grounds (3), wherein the grinding step is preferably configured so as to provide grinding dimensions in the range between 0.1 and 10 mm, in particular between 0.3 and 5 mm, more particularly between 0.5 and 2.5 mm,
screening of at least coffee grounds (3), preferably only coffee grounds (3), wherein the screening step is preferably configured so as to remove particles with a size greater than 1 mm, in particular greater than 700 µm, more particularly greater than 500 µm,
wherein preferably at least one of the grinding and screening steps is carried out before the joint supply to a mixing heating step;
and/or
wherein the process includes grinding at least one of: portion packaging material (21, 22, 23), collection container material (24) and coffee grounds (3), preferably after drying thereof, configured so as to obtain an average particle size of less than 500 µm, in particular less than 300 µm, more particularly less than 200 µm.

In an embodiment for best results, the process includes a step of gathering materials, preferably mixing materials, of at least one of portion packaging material (21, 22, 23) and collection container material (24) again with coffee grounds (3) according to at least one of:
including at least one portion packaging material (2; 21, 22, 23, 24) and coffee grounds (3),
including at least mostly portion packaging material (2) and coffee grounds (3), including mostly portion packaging material (2) and coffee grounds (3),
further including at least one compostable material, preferably coffee husks resulting from the roasting of green coffee beans, and not including non-compostable materials,
wherein the step of gathering at least one of packaging material (21, 22, 23) and container material (24) with coffee grounds (3) is preferably carried out after a step of drying coffee grounds (3) and before the step of heating the mixture.

In an embodiment for best results, the process includes a step of regulating the quantities of materials in the mixture of portion packaging material (2) and coffee grounds (3), wherein the step of regulating the quantities of materials is preferably carried out in accordance with at least one of:
prior to or during the step of gathering and mixing of materials,
a predefined mass fraction ratio of the material mixture, preferably regulating the quantities of materials in the material mixture comprises at least one of:
   in a mass fraction of coffee grounds (3) between 10 and 60%, in particular between 15 and 50% of the total mixture mass,
   a mass fraction of portion packaging material (2) between 25 and 90%, in particular between 50 and 85% of the total mixture mass.

In an embodiment for best results, the process includes a step of adding new materials not present in the used coffee portions (1) to the mixture of portion packaging material (21, 22, 23) and collection container material (24) with coffee grounds (3), wherein the added materials preferably include at least one of: biopolymers and substances obtained from roasting coffee beans.

In an embodiment for best results, the process includes one step of adding to the mixture of portion packaging material (2) and coffee grounds (3) new materials not present in the used coffee portions (1), the new materials preferably providing a mass fraction of coffee bean roasting residues, preferably including coffee husks between 5 and 45%, in particular between 15 and 35%.

In an embodiment for best results, the portion packaging materials (21, 22, 23) have a composition that includes at least one of:
a synthetic material, including at least one from the list comprising PP, PE, and PET, and a biocompostable composite material, including at least one from the list comprising PLA, PBS, PBSA, PBAT, Bioflex, coffee bean derivatives, preferably resulting from roasting coffee beans, including coffee husks;
a biodegradable material, devoid of non-recyclable materials,
a material obtained from the processing of coffee bean roasting residues, preferably including coffee husks,
or
the portion packaging materials (2) have a composition that does not include at least one of:
a synthetic material in a mass fraction of the material mixture greater than 5%(m/m), in particular greater than 10%(m/m);
a metallic material in a mass fraction of the material mixture greater than 5% (m/m), in particular greater than 10% (m/m).

In an embodiment, portion packaging material (2), coffee grounds (3) and collection container material (24) are ground together and preferably subsequently, melted and mixed to obtain a recycled polymer which will be transformed by injection into recycled portion packaging.

Another aspect of the present disclosure relates to a recycled substance comprising a mixture of substances including recycled substances, wherein the recycled substance (5) has a composition including, preferably predominantly, substances derived from coffee grounds (3) and at least one of packaging material (21, 22, 23) from coffee portions and collection container material (24), wherein the composition of recycled substance (5) is preferably provided according to at least one of:
comprising at least 80% (m/m), preferably the entirety of its composition by weight, of substances derived from portion packaging material (21, 22, 23) and coffee grounds (3) obtained from the recycling of used coffee portions (1);
comprising at least 30%, preferably at least 40%, more preferably at least 50% of its composition by weight, of substances derived from the heating of coffee grounds (3) at a melting temperature (TM);
wherein at least one packaging material (21, 22, 23) and at least one container material (24) comprises at least one biopolymer obtained from parts of the husk of a plant product, including at least one of coffee husk, rice husk, and cinnamon bark;
wherein it is devoid of at least one of: non-biodegradable substances, substances not derived from a substance of plant origin.

In an embodiment for best results, the composition of the recycled substance (5) comprises substances derived from portion packaging material (2) and coffee grounds (3) obtained from the recycling of used coffee portions (1), preferably wherein at least the majority of its mass composition consists of portion packaging material (2) and coffee grounds (3) obtained from the recycling of used coffee portions (1).

In an embodiment for best results, the composition of the recycled substance (5) comprises substances not derived from portion packaging material (2) and coffee grounds (3) obtained from the recycling of used coffee portions (1); the composition of the recycled substance (5) comprising at least one substance from the list of vegetable residues and biopolymers that includes: coffee bean roasting residues, including at least one of: coffee bean waste, coffee husks, agricultural product residues such as: rice husks, cinnamon barks or mixtures thereof; polymers/biopolymers such as PLA, PBS, PBSA, PBAT, Bioflex, or mixtures thereof.

In an embodiment for best results, the recycled substance comprises at least 51% (m/m) of the following combination: portion packaging material (2), coffee grounds (3) and collection container material (24). Preferably at least 60% (m/m); more preferably at least 70% (m/m); even more preferably at least 80% (m/m), at least 90% (m/m); at least 100% (m/m).

In an embodiment for best results, the mass quantities of portion packaging material (2), coffee grounds (3) and collection container material (24) are equal.

Another aspect of the present disclosure relates to an article comprising a recycled substance (5)
wherein the article is configured as at least part of, preferably the entirety of: a package, including a package for collecting edible substances in an oxygen-tight manner, a constructive and/or functional part, or a constructive profile;
   and/or
wherein the article comprises, in at least the majority, preferably the entirety, a recycled substance (5) obtained from the joint processing of coffee grounds (3) and packaging material (2).

In the present disclosure, all percentages are expressed as mass percentages.

### BRIEF DESCRIPTION OF THE FIGURES

For easier understanding, figures are herein attached, which represent preferred embodiments that are not intended to limit the object of the present description.
**Figure 1****:** side section view of a first preferred embodiment of coffee portion (1) comprising an individual portion of precursor substance (PS).
**Figure 2****:** side section view of a second preferred embodiment of coffee portion (1) comprising an individual portion of precursor substance (PS).
**Figure 3****:** perspective view of a third preferred embodiment of coffee portion (1), in this case a coffee portion (1) comprising a plurality of individual portions of precursor substance (PS).
**Figure 4****:** side section view of an embodiment of a collection container (4) of coffee portions (1), including coffee grounds (3).
**Figure 5****:** perspective view of an embodiment of a collection container (4) of coffee portions (1).
**Figure 6****:** side section view of an embodiment of a collection container (4) of coffee portions (1).
**Figure 7****:** flow diagram of a preferred embodiment of the recycling process.
**Figure 8****:** flow diagram of a preferred embodiment of the recycling process.
**Figure 9****:** flow diagram of a preferred embodiment of the recycling process.
**Figure 10****:** flow diagram of a preferred embodiment of the recycling process.
**Figure 11****:** Graph showing the distribution of coffee grounds (3) sizes prior to a joint heating step with packaging material (2).
**Figure 12****:** Graph showing the mass loss of coffee grounds (3) when exposed to temperatures above 100 °C.
**Figure 13****:** image at a first microscopic scale of coffee grounds (3) after a drying step in a process according to the disclosure.
**Figure 14****:** image at a second microscopic scale of coffee grounds (3) after a drying step in a process according to the disclosure.

### DETAILED DESCRIPTION

The present disclosure describes processes for recycling portions (1) of coffee comprising packaging material (2) and a portion of edible beverage precursor substance, in particular roast and ground coffee beans, after use of these portions (1) of coffee in beverage preparation apparatus (10), in order to obtain a recycled substance (5) suitable for reuse in the production of different articles including packaging, containers, and constructive parts.

The present disclosure further describes a recycled substance (5) obtained based on a recycling process of the type of the present invention.

The process according to the present disclosure relates to the recycling of portions (1) of beverage precursor substances, in particular coffee portions (1).

In an embodiment, the coffee portions (1) are provided in the form of individual portions, i.e., a quantity required only for the preparation of an individual beverage, for example between 5 and 7 g of precursor substance, and having a respective packaging, for example in the form of a capsule or the like, or they can be provided in the form of a larger quantity corresponding to several individual portions and provided in a respective supply packaging.

In the case of recycling coffee portions (1) provided in containers or packaging comprising multiple individual portions, for example with a quantity of roast and ground coffee beans between 200 g and 2 kg, the coffee grounds (3) can be collected in the same supply packaging or in a new packaging, hereinafter referred to as a collection container (4), for example in the form of a bag, and provided in at least one packaging material (2).

According to a first aspect, the process according to the present disclosure includes at least one step of joint recycling of coffee grounds (3) and at least one packaging material (2), including at least one of: at least one packaging material (21, 22, 23) of a portion or portions, and material (24) of the collection container (4), wherein the joint recycling step is preferably a heating step at a heating temperature (TH), as will be explained in more detail below.

In an embodiment, the process according to the present disclosure includes the provision and operation *in situ* of coffee portions (1) in a beverage preparation apparatus, as well as a plurality of recycling steps after the use of coffee portions (1) for the preparation of beverages.

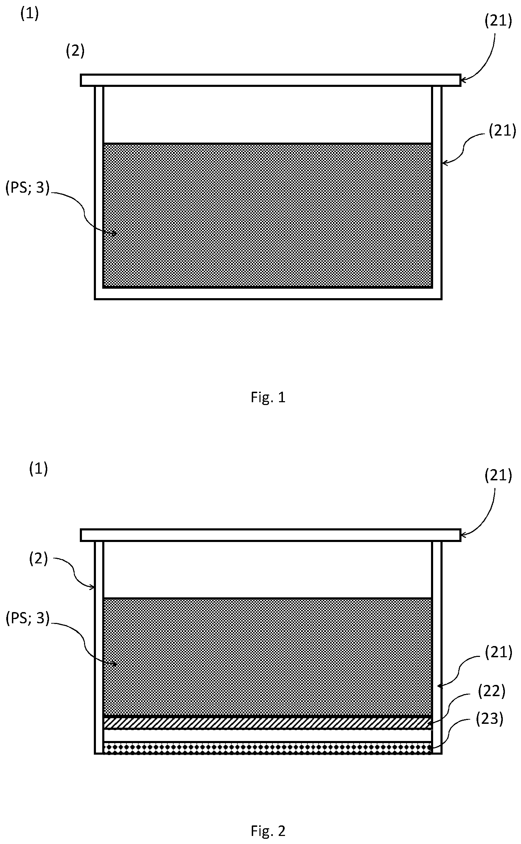

Figures 1 and 2 schematically represent two types of coffee portions (1), in these cases individual capsule-type coffee portions (1).

In an embodiment, the portions (1) are individual portions of precursor substances (PS) for aromatic beverages, preferably including substances derived from coffee beans.

In an embodiment, the coffee portions (1) comprise a package comprising at least one packaging material (2) and configured so as to confine the portion of beverage precursor substance (PS).

In an embodiment, the coffee portions (1) are configured in the form of capsules, tablets, strips having a plurality of encapsulations, or other packaging forms.

In an embodiment, the coffee portions (1) comprise a portion of roast and ground coffee beans corresponding to at least one individual portion for the preparation of an espresso-type beverage.

In an embodiment, the portion of beverage precursor substance (PS) includes roast and ground coffee beans.

The portion of precursor substance (PS) results in a coffee ground (3) as a result of the extraction by a pressurized flow having at least one of: a flow temperature comprised between 40 and 90°C, preferably between 60 and 80°C, and a flow pressure comprised between 2 and 20 bar, preferably between 4 and 18 bar.

In an embodiment, the coffee portions (1) comprise a packaging material (2), as in the embodiment shown in Figure 1, or a plurality of packaging materials (21, 22, 23), as in the embodiment shown in Figure 2.

In an embodiment, the coffee portions (1) comprise a package comprising a container part (11) and a lid part (12), wherein at least one of the parts of container (11) and lid (12) can be configured as flexible, semi-rigid or rigid.

In an embodiment, the coffee portions (1) are configured such that at least one of said container and lid parts (11, 12) is provided in a first packaging material (21), preferably a composite material.

In an embodiment, the packaging material (2) is not a metallic material or a metallic composite material in which the majority of the fraction is a metallic material.

In an embodiment, the composite material (21) includes at least one from the list of polymers including: Polypropylene (PP), Polyethylene (PE), Polyethylene terephthalate (PET).

In an embodiment, the composite material (21) includes at least one from the list of biopolymers including: Polylactic acid (PLA), Polybutylene succinate (PBS), Polybutylene succinate adipate (PBSA), Polybutylene adipate-co-terephthalate (PBAT).

In an embodiment, the packaging material (2) includes mainly biopolymer materials, preferably only biopolymer materials, and at least one substance resulting from the processing of green coffee beans to obtain roast and ground coffee beans, including at least one of: a derivative substance and an industrial waste substance.

In an embodiment, the biopolymer composite material (21) includes Bioflex.

In an embodiment, the biopolymer composite material (21) includes at least one from the list of plant materials from the list of coffee bean derivatives that includes coffee grounds, coffee husks, natural fibers derived from the processing of rice and/or cinnamon.

In an embodiment, as shown in Figure 2, the portion packages of coffee portions (1) comprise at least one closure element (13) and/or at least one filter element (14).

In an embodiment, the closure element (13) is configured in a second packaging material (22), preferably a metallic material or metal alloy.

In an embodiment, the filter element (14) is configured in a third packaging material (23), preferably a cellulosic material, for example paper.

After use of the coffee portions (1), the beverage precursor substance (PS) results in coffee grounds (3).

The coffee grounds (3) include at least one of: grounds of roast and ground coffee beans, grounds of soluble coffee, grounds of a mixture of coffee and another edible substance.

In another embodiment of the present disclosure, the process of recycling portions (1) of coffee initially distributed to locations *in situ* comprising a plurality of individual portions of precursor substance (SP), in packages containing an amount of, for example, between 500 g and 5 kg, of at least one of: green coffee beans, roast coffee beans, and roast and ground coffee beans.

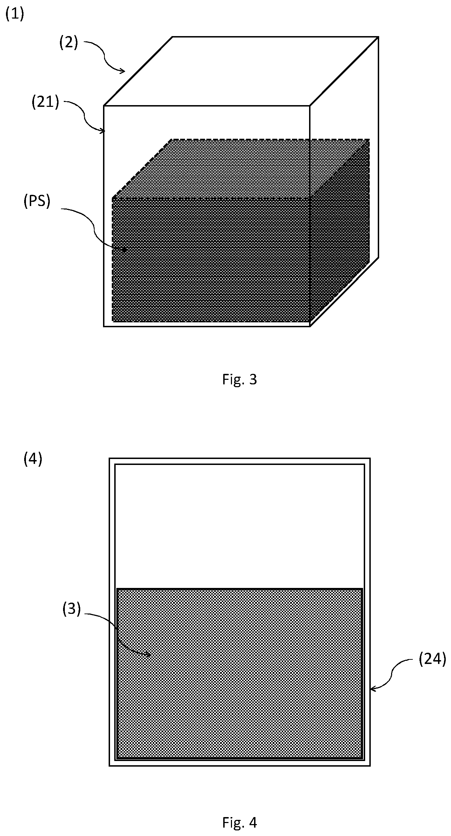

Figure 3 represents a portion (1) of coffee comprising a plurality of individual portions confined in a package that is similarly provided in at least one packaging material (21).

The portion (1) of coffee comprises in this case a package configured as, for example, bags, packets or containers, and is at least one of: a composite material, a synthetic material and a biodegradable material.

In an embodiment, the package is a flexible material, so that it can be manipulated in order to occupy a smaller volume when empty.

In an embodiment, when the packaging material (2) of the coffee portion (1) comprises a plurality of portions of precursor substance (SP), it is also recycled by means of a process according to the present disclosure.

In an embodiment, the process according to the present disclosure includes a step of collecting portions (1) of coffee from an *in situ* location and transporting them to an *ex situ* location.

In an embodiment, the process includes a step of collecting *in situ* at least one of: portions (1) of coffee confining coffee grounds (3) and only coffee grounds (3) previously used in the preparation of a beverage including coffee.

In an embodiment, the portions of coffee (1) are collected *in situ* in a collection container (4) and transported therein to an *ex situ* location, it being preferred when the collection container (4) is configured as a liquid-tight container material (24).

In addition, the process advantageously includes the step of collecting portions (1) of coffee *in situ* in a collection container (4) and transporting it to an *ex situ* location, it being preferred when the portions (1) of coffee are collected in a collection container (4) that has at least one of: a capacity for at least 30 portions (1) of coffee, preferably at least 50 portions (1) of coffee, particularly preferably at least 100 portions (1) of coffee, and a total weight of up to 50 kg, preferably up to 20 kg, more preferably a weight of up to 10 kg.

In an embodiment, the collection container (4) is configured by at least one container material (24) and configured for collecting a quantity of individual portions of coffee, including at least coffee grounds (3), optionally also packaging material (2) of the portion, preferably a total weight of at least 1 kg, preferably at least 3 kg.

In an embodiment, the collection container (4) is configured for collecting a plurality of at least one of: portions (1) of coffee including a respective amount of coffee grounds (3) and a respective individual packaging, such as a capsule, and portions (1) of coffee including a respective amount of coffee grounds (3) and devoid of an individual packaging.

In an embodiment, the collection container (4) is advantageously the same container used for distributing a plurality of coffee portions (1) from an *ex situ* location to the consumption location.

Figures 4 to 6 represent a collection container (4) for collecting a quantity of coffee portions (1) at an *in situ* location.

According to a preferred embodiment, the collection container (4) is the same container used to supply the coffee portion (1) from an *ex situ* location to the *in situ* location.

In an embodiment, as shown in Figure 4, it is advantageous when the collection container (4) is configured so as to confine an interior volume in order to be closed and prevent liquids from escaping.

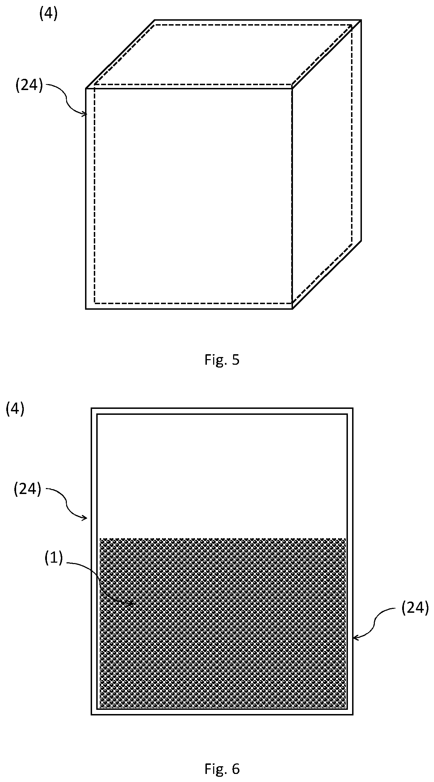

In an embodiment, as shown in Figure 5, it is particularly advantageous when the collection container (4) is configured in a flexible container material (24) configured so as to occupy at least approximately a parallelepiped shape.

Furthermore, it is advantageous when the collection container (4) is configured in a container material (24) that is at least partially transparent, so that it allows solar radiation, including infrared radiation, to enter.

Figure 6 shows a collection container (4) configured so as to allow the collection of a plurality of individual coffee portions (1), i.e., coffee portions (1) comprising packaging material (2) and coffee grounds (3), so that both can be supplied to subsequent recycling steps with the aim of obtaining a recycled substance (5).

In an embodiment, according to a particularly advantageous aspect, the process is devoid of an *in situ* step of separating the packaging material (2) and the coffee grounds (3).

In an embodiment, the process includes a step of separating, preferably temporarily, the packaging material (2) and the coffee grounds (3), wherein said step is preferably carried out *ex situ.*

In an embodiment, the process includes an *ex situ* step of mixing the packaging material (2) and the coffee grounds (3) previously separated *ex situ.*

In an embodiment, the process is devoid of at least one of: a separating mechanical processing and a separating thermal processing of the packaging material (2) and the coffee grounds (3).

In an embodiment, the process includes an *ex situ* step of separating the packaging material (2) from the grounds of precursor substance (3), wherein said step is preferably performed prior to a joint processing step.

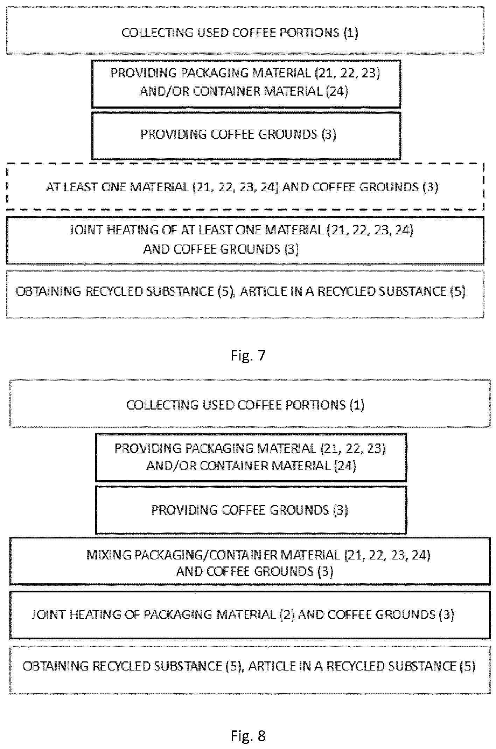

According to the present disclosure, and as represented in Figures 7 and 8, the process includes at least one step of joint processing of packaging material (2) and coffee grounds (3) to obtain a recycled substance (5), preferably at least one step of joint heating the packaging material (2) and the coffee grounds (3) to obtain a recycled substance (5), and an article provided in this recycled substance (5).

In an embodiment, the process includes at least one step of joint processing of at least packaging material (2) and coffee grounds (3) in order to obtain a recycled substance (5), such that the recycled substance (5) has substances derived from packaging material (2) and coffee grounds (3) in its composition.

In this way, the use of coffee grounds (3) for the production of a recycled substance (5) is advantageously provided, on the one hand, and in a recycling process with synergies and economies of scale with the recycling of packaging material (2), preferably at an *ex situ* location, on the other hand.

In an embodiment, the process includes at least one joint processing step carried out *ex situ.*

In an embodiment, the joint processing step can be configured so that the packaging material (2) and coffee grounds (3) are supplied simultaneously, and/or in mass fractions different from the respective mass fractions present in the coffee portion (1), and/or exposed to a heating temperature (TH), wherein said heating temperature (TH) preferably corresponds at least to the melting temperature (TM) of at least one component of the packaging material (2).

As shown in Figure 7, according to one aspect of the present disclosure, the process includes a step of joint heating a mixture of at least packaging material (2) and coffee grounds (3), optionally other additional materials, at least at a predefined heating temperature (TH), in particular so as to obtain a mixture melt of recycled substance (5).

In an embodiment, the step of joint heating is carried out with heating at least up to a predefined heating temperature (TH) and for a predefined period of time of less than 30 minutes, preferably less than 20 minutes.

As explained in more detail below, coffee grounds (3) suffer a loss of mass when subjected to temperatures above 100 °C for periods of time exceeding 20 minutes.

In an embodiment, the heating temperature (TH) corresponds at least to the melting temperature (TM) characteristic of the packaging material (2) with the highest melting temperature (TM), and it is preferred when the melting temperature (TM) is less than 300 °C, preferably between 140 °C and 220 °C, more preferably between 160 °C and 200 °C.

In an embodiment, the process of heating the mixture of packaging material (2) and coffee grounds (3) is carried out at a heating temperature (TH) below the temperature at which substantial material degradation of the coffee grounds (3) occurs, preferably below 260 °C, more preferably below 220 °C; and/or for a period of less than 30 minutes, preferably less than 20 minutes.

In an embodiment, the process includes supplying at least most of the substances present in the portions (1) of coffee after preparation of a beverage, including most of the packaging material (2) and/or the coffee grounds (3), preferably all of the portions (1) of coffee, more preferably simultaneously with a step of joint heating a mixture of these substances, so as to obtain a melt of recycled substance (5).

In an embodiment, the process successively includes:
- a step of joint heating a calibrated mixture of a plurality of different substances, including fractions of packaging material (2) and coffee grounds (3), and
- a step of injecting the mixture melt obtained as a result of the heating step into molds so as to obtain articles provided in the recycled substance (5);
- a step of discharging the mixture melt so as to obtain elongated elements which can be subsequently divided into granular-shaped elements.

In an embodiment, the process includes at least one step of handling the melt of the recycled substance (5) to obtain new articles, including packaging material (2) for coffee portions (1).

In an embodiment, the process according to the present disclosure includes at least one step of handling the melt of recycled substance (5) including injection into molds and/or three-dimensional printing.

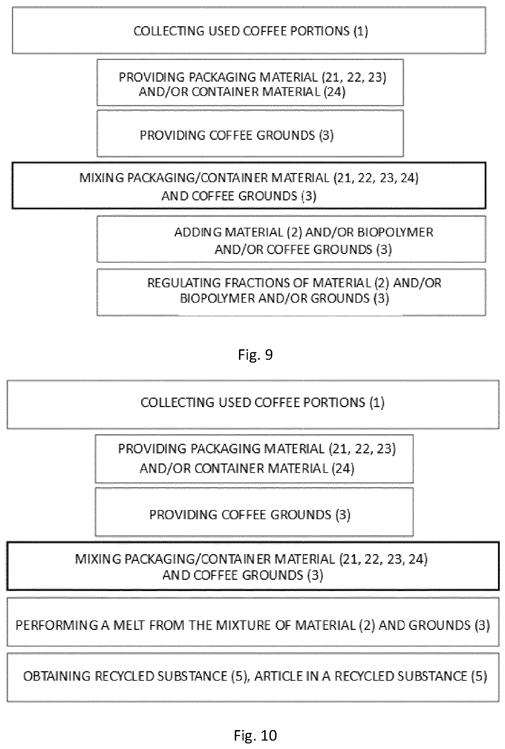

Figures 8 and 9 represent a step of mixing, preferably *ex situ,* of packaging material (2) and coffee grounds (3).

In an embodiment, the mixing step is advantageously performed after steps of separating materials from the used coffee portions (1). That is, separation of packaging materials (2) and coffee grounds (3).

In an embodiment, the mixing step is carried out after at least one of: a grinding step, a washing step, and a drying step of at least one of packaging material (2) and coffee grounds (3), preferably both.

In an embodiment, the process includes supplying at least two different materials of coffee portion (1) to subsequent recycling steps so that a recycled substance (4) results, the at least two different materials of coffee portion (1) including at least one packaging material (2) and coffee grounds (3).

In an embodiment, the process includes a step of heating the mixture of packaging material (2) and coffee grounds (3), in particular of melting the mixture granules to a melting temperature (TM), so as to obtain a recycled material (5).

In an embodiment, the mixture includes other materials in addition to packaging material (2) and coffee grounds (3).

In an embodiment, coffee residues, i.e., coffee grounds (3), coffee bean roasting residues, including coffee husks, and at least one polymer, preferably a biopolymer, including at least one of PLA and PBS, are used.

In an embodiment, the process includes a step of drying packaging material (2) and coffee grounds (3) at a drying temperature (TD), wherein the drying step is preferably carried out after a step of separating packaging material (2) and coffee grounds (3); or before a step of mixing packaging material (2) and coffee grounds (3).

In an embodiment, the drying step comprises a first and a second step.

The first drying step is advantageously carried out at room temperature (Tamb, approximately 20°C) for a period of up to one week, preferably up to 72 hours and/or for at least 24 hours, if the room temperature is at least 10°C and the ambient humidity is up to 80%.

In an embodiment, the second drying step of coffee grounds (3) is carried out at a drying temperature (TD) of up to 80 °C, preferably up to 50 °C, and in a period preceding the step of calibrating the mixture of up to 24 hours, more preferably up to 12 hours.

In an embodiment, the process includes a step of screening the coffee grounds (3) so that they have an average grain size of up to 1 mm, preferably up to 0.5 mm. This advantageously ensures that the coffee grounds have an average size that promotes their mixing and physical and chemical association with the packaging material (2).

The coffee grounds (3) can then be mixed with the packaging material (2), preferably after it has been ground.

Figures 9 and 10 represent the inclusion of *ex situ* mixing steps of packaging material (2) and coffee grounds (3), after a previous step of separating them, preferably *ex situ,* and before a step of heating these materials together, preferably also *ex situ,* i.e., at a recycling site, preferably a factory site.

In an embodiment, as shown in Figure 9, the process according to the present disclosure may include only one step of mixing materials *ex situ,* preferably in predefined mass fraction ratios, preferably different from those found in the coffee portions (1).

In an embodiment, the process includes a step of mixing materials from used coffee portions (1) to obtain a mixture of substances for supply to a subsequent step of joint melting of the mixture of materials from used coffee portions (1).

In an embodiment, the process includes a step of mixing materials from used coffee portions (1) to obtain a mixture having at least one predefined ratio between packaging material (2) and coffee grounds (3), and/or a homogeneous distribution of packaging material (2) and coffee grounds (3).

In an embodiment, the process includes a step of mixing materials from used coffee portions (1), including at least one of packaging material (2) and coffee grounds (3) resulting from used coffee portions (1), preferably both.

In an embodiment, the process includes a step of mixing at least mostly, preferably only, used coffee portion materials (1), including at least packaging material (2) and/or coffee grounds (3) resulting from used coffee portions (1), preferably both.

In an embodiment, the step of mixing materials from used coffee portions (1) includes a step of regulating the fractions, i.e., relative quantities, of packaging material (2) and coffee grounds (3) according to predefined ratios.

In an embodiment, the mixing step includes a step of mixing quantities of packaging material (2) and coffee grounds (3) resulting from used coffee portions (1), preferably by means of mechanical mixing devices, in particular by rotating mixing means, so as to obtain a mixture to be supplied to the melting step.

In an embodiment, the step of mixing materials from used coffee portions (1) is configured so that the recycled substance (4) is a substance devoid of non-biodegradable materials.

In an embodiment, the step of mixing materials from used coffee portions (1) is performed before a step of supplying the mixture to a mixture melting step.

Alternatively or additionally, and as shown in Figure 10, the process includes a step of adding other materials and/or a step of regulating the material fractions in the mixture, prior to the step of joint heating the packaging material (2) and coffee grounds (3).

In an embodiment, the process includes a step of grinding at least the packaging material (2) before a step of mixing with coffee grounds (3) and before a step of joint heating.

In an embodiment, the process includes a step of mixing previously ground packaging materials (2) with previously dried coffee grounds (3).

In an embodiment, the mixture includes particles of packaging material (2) and coffee grounds (3) according to the following ranges:
- with a characteristic particle size of less than 1.3 mm, preferably less than 0.7 mm, a density such that the mass fraction of coffee grounds (3) is greater than 50%(m/m), preferably between 50 and 80%(m/m); or
- with a characteristic particle size between 0.5 and 1.5 mm, preferably between 0.7 and 1.4 mm; with a characteristic size greater than 1.4 mm and mostly packaging material (2).

In an embodiment, the mixture of portion packaging materials (2) and coffee grounds (3) has between 0.2 and 0.8 kg/dm3, preferably between 0.3 and 0.6 kg/dm3, more preferably between 0.35 and 0.55 kg/dm3.

In an embodiment, the process includes a step of mixing packaging material (2) and coffee grounds (3) in a mass ratio comprised between 10-90% and 80-20%, preferably between 30-70%(m/m) and 70-30%(m/m).

In an embodiment, the mass fraction of portion packaging material (2) does not exceed 50% (m/m), preferably does not exceed 30%, more preferably does not exceed 20% (m/m).

In an embodiment, the mass fraction of coffee grounds (3) is at least 20% (m/m), preferably at least 30% (m/m), particularly preferably at least 50% (m/m).

In an embodiment, the process further includes a step of mixing packaging material (2) and coffee grounds (3) in a mass ratio that does not differ by more than 500%, preferably does not differ by more than 300%, from the mass ratio between packaging material and precursor substance (SP) in the coffee portion (1).

In an embodiment, the process includes mixing coffee grounds (3) with at least one of: polymeric material, including synthetic and/or a biopolymer, and packaging material (2).

Another aspect to consider in the recycling of coffee grounds (3) is their size, particularly before mixing with packaging material (2) in order to obtain a mixture for joint heating to obtain a recycled substance (4).

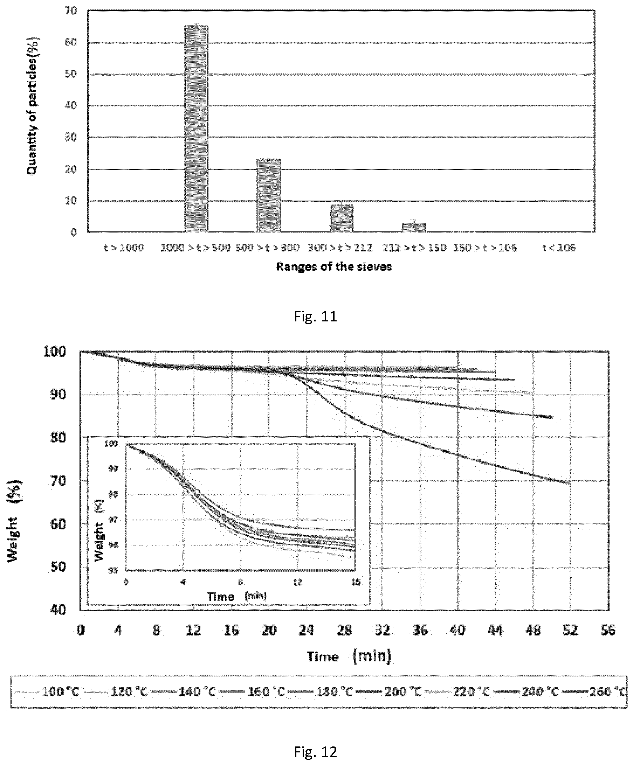

Figure 11 shows the grain size distribution of coffee grounds (3) used in an advantageous sample, after a grinding and calibration step, preferably carried out ex *situ.*

As shown, the coffee grounds (3) advantageously have at least a major portion with a size between 1000 and 500 micrometers, and it is preferred when the remaining minor portion has a size above 100 micrometers.

In an embodiment, the coffee grounds (3) have a grain size of less than 1000 micrometers.

In an embodiment, the process according to the present disclosure includes a step of supplying a quantity of coffee grounds (3), at least the majority of which has a grain size of less than 1000 micrometers, to a step of joint processing with packaging material (2).

As mentioned above, another aspect to consider in the recycling of coffee grounds (3) is the risk of substantial loss of mass of the grounds in the event of exposure, particularly prolonged exposure, to temperatures above room temperature, in particular above 100 °C, either for drying moisture from them or for heating together with a packaging material (2) in order to obtain a recycled substance (5).

Figure 12 shows a graph with the results of experimental measurements of the percentage change in mass of coffee grounds (3) as a function of a heating temperature (TH) above 100 °C and the period of exposure to a heating temperature (TH).

As can be seen, the loss of mass is greater for temperatures above 220 °C, and in particular for temperatures above 240 °C.

Coffee grounds (3) suffer a loss of mass when subjected to temperatures above 100 °C for periods exceeding 20 minutes.

In a preferred embodiment, the heating process of the mixture of packaging material (2) and coffee grounds (3) is carried out at a heating temperature (TH) below the temperature at which substantial material degradation of the coffee grounds (3) occurs, preferably below 260 °C, preferably below 220 °C; and/or for a period of less than 30 minutes, preferably less than 20 minutes.

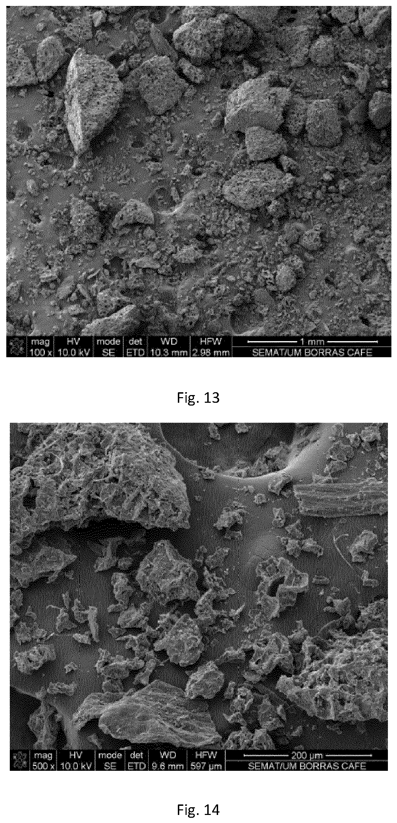

Figures 13 and 14 are microscope images of the surface of coffee grounds (3), a first image (Figure 13) at a scale of 1 mm and a second image (Figure 14) at a scale of 200 micrometers, after a drying step and before the heating step together with packaging material (2).

The term "comprise" or "comprising" whenever used in this document is intended to indicate the presence of stated characteristics, elements, integers, steps, and components, but not to preclude the presence or addition of one or more other characteristics, elements, integers, steps, and components, or groups thereof.

The present disclosure is, of course, in no way restricted to the embodiments described herein, and a person skilled in the art will be able to foresee many possibilities for modification thereof and for substitution of technical characteristics by equivalent ones, depending on the requirements of each situation, as defined in the appended claims.

The following claims define additional embodiments of the present description.

## Claims

1. Process for recycling coffee portions (1), wherein said coffee portions (1) comprise a defined amount of beverage precursor substance (PS) contained in a portion package (2) and coffee grounds (3), wherein the process includes the following steps:
obtaining at least one of portion package (2) and coffee grounds (3) in a collection container (4),
processing at least one of portion packaging material (21, 22, 23) and collection container material (24) together with coffee grounds;
obtaining a recycled substance (5) comprising a composition including coffee grounds and at least one of portion packaging material (21, 22, 23) and collection container material (24) to obtain the recycled coffee portion.

2. Process according to claim 1, wherein the process does not include at least one of the following steps:
separating the coffee grounds from the portion packaging material (21, 22, 23); separating the coffee grounds (3) from at least one of portion packaging material (21, 22, 23) and/or at least one collection container material (24) until a recycled substance (5) is obtained, preferably the process does not include separating any coffee portion packaging material (21, 22, 23) or collection container material (24); and/or wherein the process includes at least one of the following steps:
collecting coffee grounds and/or portion packages (2) at a collection site, preferably coffee grounds and portion packages (2), in a collection container (4), wherein the portion packages (2) include at least one portion packaging material (21, 22, 23) and the collection container (4) includes at least one collection container material (41),
separating coffee grounds (3) from at least one of: at least one portion packaging material (21, 22, 23) and at least one collection container material (24) at a remote location until a recycled substance (5) is obtained, preferably including separating at least one of: portion packaging material (21, 22, 23) and collection container material (24) including at least one of: composite materials and materials derived from edible substances, and
gathering at a remote location, after the separating step, coffee grounds (3) from at least one of: at least one portion packaging material (21, 22, 23) and at least one collection container material (24) so as to obtain a mixture of materials for joint processing.

3. Process according to claims 1 or 2, wherein the process includes at least one step, preferably two steps of joint processing of at least one of portion packaging material (21, 22, 23) and collection container material (24) together with coffee grounds (3), wherein it is preferred when the steps of joint processing include at least material gathering, preferably including mechanical mixing of materials, and joint heating of materials;
wherein the portion packaging material (21, 22, 23) includes at least one of: first, second and third portion material (21, 22, 23), including at least one of: an individual package configured for collection of an individual portion of beverage precursor substance and a multiple package configured for collection of a plurality of individual portions of beverage precursor substance, and/or wherein at least one collection container material (24) has a composition comprising at least one substance also present in the composition of at least one portion packaging material (21, 22, 23), and/or
wherein the beverage precursor substance includes at least one of: ground and roast coffee beans, and a derivative of roast coffee beans.

4. Process according to claims 1 to 3, wherein the process includes a step of joint heating at least one of portion packaging material (21, 22, 23) and collection container material (24) together with coffee grounds (3) in a mixture previously prepared according to at least one of:
in a predefined ratio of quantities of at least one packaging material (2; 21, 22, 23, 24) and coffee grounds (3), optionally still further materials;
including at least one of: a portion material (21, 22, 23) and collection material (24), so as to obtain a recycled substance (5) having a composition including at least one portion packaging material (2; 21, 22, 23, 24) and coffee grounds (3);
and/or
wherein the process includes a step of joint heating at least one of portion packaging material (21, 22, 23) and collection container material (24) together with coffee grounds (3) at a heating temperature (TH) according to at least one of:
comprised between 150 and 550 °C, preferably between 160 and 350 °C, more preferably between 190 and 250 °C;
corresponding to at least one melting temperature of packaging material (2);
so that a recycled substance (5) results in a liquid and/or pasty state.

5. Process according to any one of claims 1 to 4, wherein the process further includes drying at least coffee grounds (3), together with, or preferably separately from, at least one of portion packaging material (21, 22, 23) and collection container material (24), wherein preferably the drying includes at least one of:
drying, preferably a first drying step, at ambient temperature conditions between 10 and 30°C until a moisture content of at most 60%, preferably at most 50%, is reached,
drying, preferably a second drying step, at least of the coffee grounds (3), preferably at a drying temperature (DT) between 30°C and 80°C, more preferably between 35°C and 50°C, until the coffee grounds (3) reach a maximum moisture content of 5%, preferably a maximum of 3%;
wherein the drying step is preferably carried out before a step of heating the coffee grounds (3) and packaging material (2) together, wherein the process further comprises at least one of the following steps:
separating coffee grounds (3) from at least part of at least one of: portion packaging material (21, 22, 23) and collection container material (24);
separating and removing at least part of portion packaging materials (21, 22, 23), preferably including at least one of: metallic materials and non-decomposable materials;
washing the portion packaging material (21, 22, 23), preferably separately from the coffee grounds (3);
removing foreign materials and objects other than at least one of: portion packaging material (21, 22, 23) and coffee grounds (3),
wherein preferably the steps of washing and removing foreign materials and objects are carried out before the step of drying at least the coffee grounds (3).

6. Process according to any one of claims 1 to 5, wherein the process includes at least the following steps:
grinding at least one of portion packaging material (21, 22, 23), collection container material (24) and coffee grounds (3), wherein the grinding step is preferably configured so as to provide grinding dimensions in the range between 0.1 and 10 mm, in particular between 0.3 and 5 mm, more particularly between 0.5 and 2.5 mm,
screening of at least coffee grounds (3), preferably only coffee grounds (3), wherein the screening step is preferably configured so as to remove particles with a size greater than 1 mm, in particular greater than 700 µm, more particularly greater than 500 µm,
wherein preferably at least one of the grinding and screening steps is carried out before the joint supply to a mixing heating step;
and/or
wherein the process includes grinding at least one of: portion packaging material (21, 22, 23), collection container material (24) and coffee grounds (3), preferably after drying thereof, configured so as to obtain an average particle size of less than 500 µm, in particular less than 300 µm, more particularly less than 200 µm.

7. Process according to any one of claims 1 to 6, wherein the process includes a step of gathering materials, preferably mixing materials, of at least one of portion packaging material (21, 22, 23) and collection container material (24) again with coffee grounds (3) according to at least one of:
including at least one portion packaging material (2; 21, 22, 23, 24) and coffee grounds (3),
including at least mostly portion packaging material (2) and coffee grounds (3),
including mostly portion packaging material (2) and coffee grounds (3), further including at least one compostable material, preferably coffee husks resulting from the roasting of green coffee beans, and not including non-compostable materials,
wherein the step of gathering at least one of packaging material (21, 22, 23) and container material (24) with coffee grounds (3) is preferably carried out after a step of drying coffee grounds (3) and before the step of heating the mixture.

8. Process according to any one of claims 1 to 7, wherein the process includes a step of regulating the quantities of materials in the mixture of portion packaging material (2) and coffee grounds (3), wherein the step of regulating the quantities of materials is preferably carried out in accordance with at least one of:
prior to or during the step of gathering and mixing of materials,
a predefined mass fraction ratio of the material mixture, preferably regulating the quantities of materials in the material mixture is configured according to at least one of:
in a mass fraction of coffee grounds (3) between 10 and 60% (m/m), in particular between 15 and 50% (m/m) of the total mixture mass,
a mass fraction of portion packaging material (2) between 25 and 90% (m/m), in particular between 50 and 85% (m/m) of the total mixture mass.

9. Process according to any one of claims 1 to 8, wherein the process includes a step of adding new materials not present in the used coffee portions (1) to the mixture of portion packaging material (21, 22, 23) and collection container material (24) with coffee grounds (3), wherein the added materials preferably include at least one of: biopolymers and substances obtained from roasting coffee beans.

10. Process according to any one of claims 1 to 9, wherein, the process includes one step of adding to the mixture of portion packaging material (2) and coffee grounds (3) new materials not present in the used coffee portions (1), the new materials preferably providing a mass fraction of coffee bean roasting residues, preferably including coffee husks between 5 and 45% (m/m), in particular between 15 and 35% (m/m).

11. Process according to any one of claims 1 to 11, wherein the portion packaging materials (21, 22, 23) have a composition that includes at least one of:
a synthetic material, including at least one from the list comprising PP, PE, and PET, and a biocompostable composite material, including at least one from the list comprising PLA, PBS, PBSA, PBAT, Bioflex, coffee bean derivatives, preferably resulting from roasting coffee beans, including coffee husks;
a biodegradable material, devoid of non-recyclable materials,
a material obtained from the processing of coffee bean roasting residues, preferably including coffee husks,
or
the portion packaging materials (2) have a composition that does not include at least one of:
a synthetic material in a mass fraction of the material mixture greater than 5%(m/m), in particular greater than 10%(m/m),
a metallic material in a mass fraction of the material mixture greater than 5% (m/m), in particular greater than 10% (m/m).

12. Recycled substance comprising a mixture of substances including recycled substances, wherein the recycled substance (5) has a composition including, preferably predominantly, substances derived from coffee grounds (3) and at least one of packaging material (21, 22, 23) from coffee portions and collection container material (24), wherein the composition of recycled substance (5) is preferably provided according to at least one of:
comprising at least 80% (m/m), preferably the entirety of its composition by weight, of substances derived from portion packaging material (21, 22, 23) and coffee grounds (3) obtained from the recycling of used coffee portions (1);
comprising at least 30% (m/m), preferably at least 40% (m/m), more preferably at least 50% (m/m) of its composition by weight, of substances derived from the heating of coffee grounds (3) at a melting temperature (TM);
wherein at least one packaging material (21, 22, 23) and at least one container material (24) comprises at least one biopolymer obtained from parts of the husk of a plant product, including at least one of coffee husk, rice husk, and cinnamon bark;
wherein it is devoid of at least one of: non-biodegradable substances, substances not derived from a substance of plant origin.

13. Recycled substance according to claim 12, wherein the composition of the recycled substance (5) comprises substances derived from portion packaging material (2) and coffee grounds (3) obtained from the recycling of used coffee portions (1), preferably wherein at least the majority of its mass composition comprises portion packaging material (2) and coffee grounds (3) obtained from the recycling of used coffee portions (1).

14. Recycled substance according to claims 12 or 13, wherein the composition of the recycled substance (5) comprises substances not derived from portion packaging material (2) and coffee grounds (3) obtained from the recycling of used coffee portions (1); the composition of the recycled substance (5) comprising at least one substance from the list of vegetable residues and biopolymers that includes: coffee bean roasting residues, including at least one of: coffee bean waste, coffee husks, agricultural product residues such as: rice husks, cinnamon barks or mixtures thereof; polymers/biopolymers such as PLA, PBS, PBSA, PBAT, Bioflex, or mixtures thereof.

15. Article comprising a recycled substance (5) according to any one of claims 12 to 14,
wherein the article is configured as at least part of, preferably the entirety of: a package, including a package for collecting edible substances in an oxygen-tight manner, a constructive and/or functional part, or a constructive profile;
and/or
wherein the article comprises, in at least the majority, preferably the entirety, a recycled substance (5) obtained from the joint processing of coffee grounds (3) and packaging material (2).
